# EUROPÄISCHE PATENTSCHRIFT

(11) **EP 2 807 697 B1**
(45) Veröffentlichungstag und Bekanntmachung des Hinweises auf die Patenterteilung: **02.08.2017**
(21) Anmeldenummer: 13710317.2
(22) Anmeldetag: 06.03.2013
(51) Int. Cl.: H01M 8/04014, F02C 6/14, H01M 8/18, H01M 12/08, F02C 6/18, H01M 10/615, H01M 10/66, H01M 10/627, H01M 10/39

(54) **GASTURBINENBEHEIZTE HOCHTEMPERATUR-BATTERIE**
GAS TURBINE-HEATED HIGH-TEMPERATURE BATTERY
BATTERIE À HAUTE TEMPÉRATURE CHAUFFÉE PAR UNE TURBINE À GAZ

(30) Priorität: 08.03.2012 DE 102012203665
(43) Veröffentlichungstag der Anmeldung: 03.12.2014
(73) Patentinhaber: Siemens Aktiengesellschaft, 80333 München (DE)
(72) Erfinder: HANEBUTH, Marc, 90482 Nürnberg (DE); KOSSE, Sylvio, 91052 Erlangen (DE); LENK, Uwe, 08064 Zwickau (DE)
(86) Internationale Anmeldenummer: PCT/EP2013/054497
(87) Internationale Veröffentlichungsnummer: WO 2013/131953

(56) Entgegenhaltungen:
- WO-A2-02/37587
- DE-A1-102009 057 720
- JP-A- H06 176 792
- JP-A- 2001 229 961
- JP-A- 2004 055 373
- US-A1- 2008 292 945

## Beschreibung

Die vorliegende Erfindung betrifft ein eine Gasturbine umfassendes Kraftwerksystem, welches zur thermischen Versorgung einer Hochtemperatur-Batterie ausgebildet ist. Weiter betrifft die vorliegende Erfindung ein Verfahren zum Betrieb eines solchen Kraftwerksystems.

Ein Kraftwerksystem, das eine Hochtemperatur-Brennstoffzelle und eine Gasturbine umfasst, ist aus der Offenlegungsschrift WO02/37587 bekannt.

Im Zuge des Umbaus der öffentlichen Stromversorgung hin zu einer Versorgung, die verstärkt auf regenerative Stromerzeugung ausgerichtet ist, stellt es sich als zunehmend wichtig heraus, auf kurzfristige Schwankungen im elektrischen Versorgungsnetz durch Bereitstellung elektrischer Regelenergiereserven zu reagieren. Insbesondere dann, wenn die öffentliche Stromnachfrage über eine Grundlast hinaus kurzfristig steigt, ist es erforderlich, mittels geeigneter Mittel- bzw. Spitzenlastkraftwerke diese zusätzliche Energienachfrage zu decken.

Gerade die Stromversorgung beim Auftreten von kurzzeitigen Spitzenlasten stellt jedoch eine große Herausforderung an die öffentliche Stromversorgung dar. Zur Deckung dieser kurzfristigen Bedarfsspitzen werden typischerweise schnell regelbare Spitzenlastkraftwerke eingesetzt. Diese können innerhalb von Sekunden bzw. Minuten hohe elektrische Leistungen dem öffentlichen Stromnetz zur Verfügung stellen und so den Bedarf decken. Auch bei der Netzregelung, bei welcher Schwankungen bei wechselnden Leistungsnachfragen im öffentlichen Stromnetz ausgeglichen werden müssen, sind Kraftwerkstypen erforderlich, die eine hohe zeitliche Dynamik hinsichtlich ihrer möglichen Leistungsabgabe erlauben.

Zu den herkömmlichen Spitzenlastkraftwerken zählen u.a. Pumpspeicher- bzw. Druckluftspeicherkraftwerke. Aber auch Gasturbinenkraftwerke eignen sich zur Netzregelung aufgrund ihrer verhältnismäßig kurzen Anfahrtszeiten, die im Bereich weniger Minuten liegen. Trotz dieser Flexibilität im Hinblick auf die Bereitstellung elektrischer Energie stellt es sich jedoch als unerlässlich dar, weitere Stromversorgungsvorrichtungen vorzuhalten, die eine sehr kurzfristige Leistungsnachfrage decken können. Hierbei können insbesondere Hochtemperatur-Batterien eine große Rolle spielen, die Leistungsabgaben an das öffentliche Stromnetz im Bereich von Sekunden bereitstellen können. Zudem erlauben solche Hochtemperatur-Batterien die elektrische Zwischenspeicherung von Überschussstrom aus dem öffentlichen Stromnetz zu Zeiten einer Überproduktion, welcher wiederum zu Zeiten erhöhter Stromnachfrage dem Stromnetz zur Verfügung gestellt werden kann.

Als Hochtemperatur-Batterie soll hierbei wie auch im Folgenden ein Batterietyp verstanden werden, dessen Betriebstemperatur über 100 °C, bevorzugt über 250 °C, weiterhin bevorzugt über 500 °C und ganz besonders bevorzugt über 600 °C liegen. Insbesondere ist hierbei der Natrium-Schwefel-Akkumulator zu erwähnen, der als Festelektrolyt-Akkumulator bei Betriebstemperaturen von typischerweise über 250 °C betrieben werden kann. Die typischen Betriebstemperaturen eines Natrium-Schwefel-Akkumulators liegen zwischen 250°C und 350°C.

Ganz besonders bevorzugt ist die Hochtemperatur-Batterie auch als Metall-Luft-Batterie ausgeführt, wie sie etwa in der Offenlegungsschrift DE 10 2009 057 720 A1 im Detail beschrieben ist. Die darin beschriebene Metall-Luft-Batterie basiert auf der Verwendung eines Metalls als reduzierbaren chemischen Speicher in Kombination mit einer Prozessgaselektrode, die typischerweise während des Betriebs mit Sauerstoff, insbesondere Luftsauerstoff versorgt wird. Zur elektrischen Trennung der im Entladebetrieb als Kathode wirkenden Prozessgaselektrode von einer metallhaltigen Anode ist ein Sauerstoffionen leitender Feststoffelektrolyt vorgesehen. Ein solcher kann bspw. Yttrium-stabilisiertes Zirkoniumdioxid sein. Der Feststoffelektrolyt erlaubt aufgrund seiner selektiven Ionenleitfähigkeit den Transport von Sauerstoffionen von der Kathode zur Anode. Gleichzeitig weist der Feststoffelektrolyt elektrische Isolationseigenschaften auf, die dafür sorgen, dass elektrische Ladungsträger von der Anode zur Kathode nur über einen externen Leiter fließen können. Um eine ausreichende Ionenleitfähigkeit gewährleisten zu können, ist es jedoch erforderlich, eine Betriebtemperatur von etwa 600°C zu erreichen. Typische Betriebtemperaturen liegen zwischen 600°C und 800°C.

Nachteilig bei dem Betrieb der oben beschriebenen Hochtemperatur-Batterien ist deren Versorgung mit ausreichender thermischer Energie zur Erreichung der notwendigen Betriebstemperaturen. Insbesondere die vorab beschriebene Metall-Luft-Batterie erfordert aufgrund ihrer Betriebstemperaturen von typischerweise wenigstens 600 °C die Bereitstellung einer großen Menge an thermischer Leistung. Dies wird typischerweise über geeignete elektrische Heizelemente, die ihrerseits wiederum durch Strom aus den öffentlichen Stromnetzen betrieben werden, zur Verfügung gestellt. Durch den zusätzlichen Bedarf an elektrischer Leistung wird die Gesamteffizienz der Hochtemperatur-Batterien jedoch merkbar vermindert. Da die Hochtemperatur-Batterien aber besonders zu Zeiten elektrische Leistung abgeben sollen, zu welchen ohnehin eine erhöhte Stromnachfrage und ein geringes Stromangebot vorliegt, und folglich der elektrische Strom aus den öffentlichen Stromnetzen verhältnismäßig teuer ist, resultiert ein unwirtschaftlicher Betrieb insbesondere zu diesen Betriebszeiten.

Folglich stellt es sich vorliegend als technische Aufgabe, diese Verringerung des Gesamtwirkungsgrades zu vermeiden und eine Anordnung vorzuschlagen, die eine Effizienzverbesserung bei Betrieb der Hochtemperatur-Batterien erlaubt. Insbesondere soll auch ein Verfahren zum Betrieb einer solchen Hochtemperatur-Batterie vorgeschlagen werden, welches einen effizienten Betrieb der Hochtemperatur-Batterie ermöglicht. Weiterhin soll eine vorteilhafte Versorgung einer Hochtemperatur-Batterie mit Energie zur Bereitstellung der notwendigen thermischen Betriebstemperaturen erreicht werden, welche zudem kostengünstig und technisch ohne wesentlichen Aufwand realisierbar ist.

Diese Erfindungsaufgabe wird durch ein Kraftwerksystem gemäß Patentanspruch 1 sowie ein Verfahren zum Betrieb eines solchen Kraftwerksystems gemäß Patentanspruch 8 gelöst.

Insbesondere wird die Erfindungsaufgabe durch ein Kraftwerksystem gelöst, welches eine über wenigstens eine Zuleitung mit einem Fluid versorgte Hochtemperatur-Batterie zur Speicherung wie auch zur Abgabe elektrischer Energie umfasst, sowie eine Gasturbine zur Erzeugung von elektrischer Energie, sowie einen Wärmetauscher, welcher dazu ausgebildet ist, thermische Energie aus dem Abgasstrom der Gasturbine zu entnehmen und auf das Fluid zu übertragen, welches Fluid nach erfolgter Wärmeübertragung der Hochtemperatur-Batterie über die wenigstens eine Zuleitung zugeführt werden kann. Darüber hinaus weist die Hochtemperatur-Batterie eine Ableitung auf, welche dazu ausgebildet ist, das Fluid aus der Hochtemperatur-Batterie abzuführen und dem Abgasstrom der Gasturbine an einem in Bezug auf den Wärmetauscher abstromseitigen Ort des Abgasstroms zuzuleiten. Ferner weist das Kraftwerksystem eine weitere Vorrichtung, welche mit thermischer Energie des vereinigten Abgasstroms betreibbar ist. Insbesondere wird die Erfindungsaufgabe auch durch das Verfahren zum Betrieb eines solchen Kraftwerksystems gelöst, wobei insbesondere die Zufuhr von thermisch in dem Wärmetauscher konditioniertem Fluid über die Zuleitung an die Hochtemperatur-Batterie temperaturgesteuert und/oder flussgesteuert erfolgt.

Erfindungsgemäß wird also die Wirkungsgradverbesserung bei Betrieb der Hochtemperatur-Batterie durch eine Integrationslösung erreicht. Hierbei wird die Hochtemperatur-Batterie in ein Kraftwerksystem integriert, welches im Regelbetrieb dazu ausgebildet ist, mittels einer Gasturbine elektrische Energie zu erzeugen. Der Abgasstrom der Gasturbine, welcher einen hohen thermischen Energiegehalt aufweist, eignet sich hierbei besonders, die thermische Energie, welche zum Betrieb der Hochtemperatur-Batterie erforderlich ist, bereitzustellen, da die thermische Energie des Abgasstroms kostengünstige Abwärme darstellt und ein ausreichendes Temperaturniveau aufweist. Um die thermische Energie aus dem Abgasstrom der Gasturbine zu entnehmen, ist erfindungsgemäß ein Wärmetauscher vorgesehen, mittels dessen thermische Energie aus dem Abgasstrom auf ein Fluid übertragen wird, welches nach erfolgter Wärmeübertragung der Hochtemperatur-Batterie zugeführt wird. Bei einem typischen Lastbetrieb der Gasturbine liegt das Temperaturniveau des Abgasstroms typischerweise bei weniger als 600 °C, jedoch bei mehr als 550 °C. Aufgrund der dabei zur Verfügung stehenden hohen Wärmemenge kann das zur Versorgung der Hochtemperatur-Batterie vorgesehene Fluid auch auf ein vergleichbares Temperaturniveau erhitzt werden. Folglich ist nicht nur der Betrieb von Natrium-Schwefel-Akkumulatoren, die eine Betriebstemperatur von über 250 °C erfordern, möglich, sondern insbesondere und bevorzugt auch der Betrieb einer weiter oben beschriebenen Metall-Luft-Batterie, die eine Betriebstemperatur von wenigstens 500 °C, typischerweise zwischen 600 °C und 800 °C aufweist. So ist es bei der beschriebenen Metall-Luft-Batterie beispielsweise erforderlich, der kathodischen Prozessgaselektrode kontinuierlich Luftsauerstoff zuzuführen, der während des Entladebetriebs zum Teil verbraucht wird. Wird bei einem herkömmlichen Betrieb die zugeführte Luft durch externe Wärmequellen, elektrisch vorgeheizt, ist erfindungsgemäß eine thermische Übertragung der Wärme aus dem Abgasstrom der Gasturbine möglich. Die thermische Energie muss vorteilhafterweise jedoch nicht unter zusätzlichem Erzeugungsaufwand generiert werden, sondern kann aus der Abwärme des Abgasstroms der Gasturbine kostengünstig entnommen werden. Da die beschriebene Metall-Luft-Batterie mitunter durch verhältnismäßig große Luftströme versorgt werden muss, bedeutet dies folglich einen großen energetischen Vorteil und eine deutliche Verbesserung des Gesamtwirkungsgrades des Kraftwerksystems sowie der mit Wärme versorgten Hochtemperatur-Batterie. Diese Bilanz fällt umso wirtschaftlicher aus, je höher das Temperaturniveau ist, auf welchem die Hochtemperatur-Batterie bei Betrieb gehalten werden muss.

Insbesondere wenn der Betrieb des Kraftwerksystems bzw. die Zuleitung des Fluids an die Hochtemperatur-Batterie durch eine vorteilhafte Temperatursteuerung und/oder Flusssteuerung erfolgt, kann die Hochtemperatur-Batterie mit geeigneten Mengen an Wärme versorgt werden, so dass ein effizienter Betrieb ermöglicht wird. Gleichzeitig kann aufgrund der Temperatursteuerung und/oder Flusssteuerung erreicht werden, dass wirtschaftliche Mengen an thermischer Energie aus dem Abgasstrom der Gasturbine entnommen werden. Folglich kann der Gesamtwirkungsgrad des erfindungsgemäßen Kraftwerksystems in geeigneter Weise gesteigert werden. Erfindungsgemäß wird die thermische Energie, die von der Hochtemperatur-Batterie nicht weiter benötigt wird, dem Abgasstrom der Gasturbine wieder zur Verfügung gestellt, um dadurch nachfolgend weitere Einrichtungen mit thermischer Energie versorgen zu können. Eine solche Ausführungsform stellt sich insbesondere bei einem gekoppelten Gas- und Dampfkraftwerk als geeignet heraus, bei welchem die Dampferzeugung zum Betrieb einer Dampfturbine mit thermischer Energie aus dem Abgasstrom der Gasturbine versorgt wird.

Je nach Betriebszustand der Hochtemperatur-Batterie kann diese auch mehr oder weniger thermische Energie für den eigenen Betrieb benötigen. Demgemäß können auch kleinere bzw. größere Mengen an thermischer Energie nach Rückführung in den Abgasstrom der Gasturbine wieder zur Verfügung gestellt werden. Zudem ist es auch möglich, dass die Hochtemperatur-Batterie bei Betrieb zusätzliche thermische Energie zur Verfügung stellt. Dies ist bspw. der Fall bei der oben beschriebenen Metall-Luft-Batterie, welche bei Entladung aufgrund einer exothermen Reaktion des Metalls mit Wasserdampf zu einem Metalloxid zusätzliche thermische Energie auf das Fluid übertragen kann. Diese kann nach geeigneter Zurückführung an den Abgasstrom der Gasturbine abstromseitig vorteilhaft genutzt werden. Eine Rückführung des Fluids in den Abgasstrom der Gasturbine kann folglich erneut den Gesamtwirkungsgrad des Kraftwerksystems erhöhen. Erfolgt die Rückführung insbesondere an einem in Bezug auf den Wärmetauscher abstromseitigen Ort des Abgasstroms, so kann der Wärmetauscher bei weitgehend konstanten Temperaturverhältnissen betrieben werden.

Gemäß einer besonders bevorzugten Ausführungsform des Kraftwerksystems ist vorgesehen, dass die Temperatur des Abgasstromes der Gasturbine wenigstens eine Temperatur von 600 °C aufweist. Der typische Lastbetrieb einer Gasturbine resultiert in einem Temperaturniveau von weniger als 600 °C in dem Abgasstrom der Gasturbine. Dennoch ist es möglich, durch geeignete Wahl der Betriebsparameter der Gasturbine das Temperaturniveau des Abgasstromes auf wenigstens 600 °C anzuheben, wobei typischerweise damit die Verminderung der mechanischen Leistung der Gasturbine einhergeht. Eine solche Minderung lässt sich jedoch wiederum durch eine geeignete Leistungserhöhung einer nachgeschalteten Dampfturbine kompensieren. Wird gleichzeitig ausreichend Wärme über den Wärmetauscher auf das Fluid übertragen, welches der Hochtemperatur-Batterie nachfolgend zugeführt wird, kann auf eine zusätzliche Temperaturerhöhung, etwa durch eine zusätzliche Heizvorrichtung, zum Erreichen der Betriebstemperatur der Hochtemperatur-Batterie verzichtet werden. Dies betrifft insbesondere die weiter oben beschriebene Metall-Luft-Batterie, die mit Luft als Prozessgas betrieben werden kann. Ausführungsgemäß lässt sich die Luft also bereits vor Zuführung in die Hochtemperatur-Batterie auf ein ausreichendes Temperaturniveau erwärmen, so dass ein wirtschaftlicher Betrieb der Hochtemperatur-Batterie ermöglicht wird. Wird hierbei gleichzeitig die Bereitstellung weiterer thermischer Energie, etwa durch eine elektrisch betriebene Heizvorrichtung, überflüssig, erhöht dies erneut den Gesamtwirkungsgrad des Kraftwerksystems.

Gemäß einer weiteren Ausführungsform des erfindungsgemäßen Kraftwerksystems weist dieses weiterhin eine Turbine auf, welche mit Dampf betrieben wird, wobei dessen thermische Energie wenigstens teilweise aus dem Abgasstrom der Gasturbine entnommen ist. Bei einer solchen geeigneten Kopplung von Dampfturbine und Gasturbine kann ein verbesserter Gesamtwirkungsgrad des Kraftwerksystems erreicht werden. Bei gleichzeitiger thermischer Zwischenschaltung einer Hochtemperatur-Batterie lässt sich ein Kraftwerksystem von besonders vorteilhafter Effizienz bereitstellen.

Gemäß einer weiteren Ausführungsform des erfindungsgemäßen Kraftwerksystems weist das Kraftwerksystem ein elektrisches Heizelement auf, welches dazu ausgebildet ist, den Energiegehalt des Fluids vor Zuführung in die Hochtemperatur-Batterie über die Zuleitung zu erhöhen, insbesondere in Bezug auf die Zuleitung so angeordnet ist, dass beide miteinander in thermischer Wechselwirkung stehen. Das Heizelement erlaubt somit, das Fluid bei Bedarf mit zusätzlicher thermischer Energie zu versorgen, bevor es der Hochtemperatur-Batterie zugeführt wird. Eine solche Versorgung ist insbesondere erforderlich, wenn das Fluid nicht die erforderliche Betriebstemperatur der Hochtemperatur-Batterie aufweist. Das elektrische Heizelement kann hierbei den thermischen Differenzbetrag zur Verfügung stellen und gewährleistet folglich einen wirtschaftlichen Betrieb der Hochtemperatur-Batterie.

Gemäß einer weiteren Ausführungsform des Kraftwerksystems kann das Fluid mit einer Strömung beaufschlagt werden, welche durch einen Strömungsgenerator erzeugt wird, der mit der Zuleitung in fluidtechnischer Wirkverbindung steht. Der Strömungsgenerator erlaubt folglich die Versorgung der Hochtemperatur-Batterie mit ausreichend Fluid, was bspw. erforderlich ist, um unerwünschte Temperaturgradienten innerhalb der Hochtemperatur-Batterie zu vermeiden. Da Hochtemperatur-Batterien zahlreiche Bauteile, insbesondere keramische Bauteile, aufweisen, die bei ungewünschten Temperaturdifferenzen hohe thermische Spannungen erzeugen können, gewährleistet ein ausreichend großer Fluiddurchsatz durch die Hochtemperatur-Batterie eine Verringerung bzw. die Vermeidung solcher thermischer Spannungen, da ein größerer Wärmeeintrag unter gleichzeitig schnellerer Verteilung erfolgen kann.

Gemäß einer Weiterführung dieser Ausführungsform kann vorgesehen sein, dass das Fluid ein Gas, insbesondere Luft ist, wobei bevorzugt der Strömungsgenerator als Gebläse ausgebildet ist. Das Gebläse versorgt die Hochtemperatur-Batterie mit ausreichenden Mengen an thermisch konditionierter Luft, wodurch ein vorteilhafter Betrieb der Hochtemperatur-Batterie erreicht werden kann. Insbesondere beim Betrieb einer Metall-Luft-Batterie, wie oben beschrieben, können mittels des Gebläses ausreichende Luftmengen als Prozessgas in die Metall-Luft-Batterie zugeführt werden. Die Luftmengen sind hierbei geeignet, um thermische Spannungen in der Metall-Luft-Batterie soweit zu vermeiden, dass keine Brüche und damit Zerstörungen an den einzelnen Bauteilen auftreten.

Gemäß einer weiteren Ausführungsform des erfindungsgemäßen Kraftwerksystems ist das Fluid ein Gas, insbesondere Luft, und die Hochtemperatur-Batterie ist eine Metall-Luft-Batterie, die bevorzugt als Prozessgas thermisch konditionierte Luft erfordert. Besonders bevorzugt ist es, wenn die thermische Konditionierung der Luft ein Temperaturniveau von wenigstens 600 °C gewährleistet. Ausführungsgemäß wird der Sauerstoff der Luft in einem Entladezustand der Metall-Luft-Batterie reduziert und tritt nach geeigneter Ionenwanderung durch den Festelektrolyten. Anschließend wird der ionische Sauerstoff durch gleichzeitige Abgabe von elektronischen Ladungsträgern durch elementaren Wasserstoff reduziert. Da die Luft bereits ein ausreichendes Temperaturniveau aufweist, ist sie in der Lage den Festelektrolyten auf eine Betriebstemperatur zu erwärmen, bei welcher eine vorteilhafte Ionenleitung ermöglicht ist. Die der Luft innewohnende thermische Energie kann folglich durch direkten Wärmeübertrag auf den Festelektrolyten bzw. auf die Kathode übertragen werden. Dies stellt einen besonders effizienten Wärmeübertrag innerhalb einer solchen Metall-Luft-Batterie dar.

Weitere Ausführungsformen ergeben sich aus den Unteransprüchen.

Nachfolgend soll die Erfindung anhand einzelner Figuren in welchen konkrete Ausführungsformen dargestellt sind, näher erläutert werden. Hierbei soll die Konkretisierung der Erfindungen in einzelnen Figuren keine Einschränkung hinsichtlich der Allgemeinheit der Erfindung darstellen. Insbesondere ist darauf hinzuweisen, dass die Figuren lediglich schematische Darstellungen sind, welche in erster Linie eine erleichterte Verständnisfähigkeit unterstützt.

Hierbei zeigen:
Fig. 1 eine schematische Schaltanordnung zur Versorgung einer Hochtemperatur-Batterie mittels externer Wärmequelle;
Fig. 2 eine erste nicht erfindungsgemäße Ausführungsform in einer schematischen Schaltansicht;
Fig. 3 eine Ausführungsform der Erfindung in einer schematischen Schaltansicht;
Fig. 4 eine schematische Ansicht gemäß einer nicht erfindungsgemäßen Ausführungsform in einer Schaltansicht;

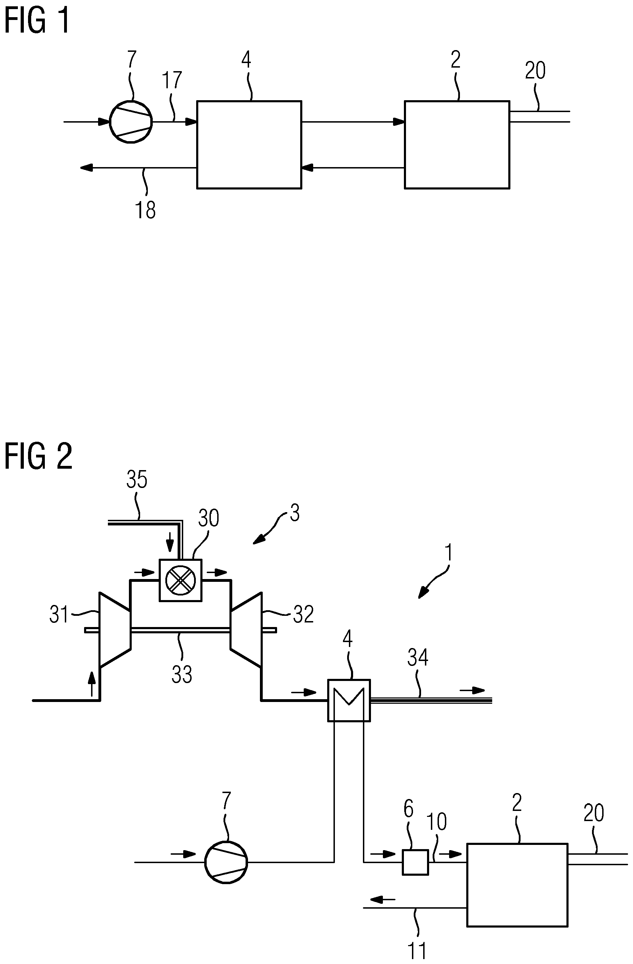

Fig. 1 zeigt eine schematische Darstellung einer Schaltanordnung zur Ableitung der in einer Hochtemperatur-Batterie 2 entstehenden thermischen Leistung mittels eines Wärmetauschers 4. Dies ist beispielsweise bei Betrieb der oben beschriebenen Metall-Luft-Batterie der Fall. Hierbei wird in einem Betriebszustand in welchem die Hochtemperatur-Batterie 2 thermische Leistung zur Verfügung zu stellen in der Lage ist, diese an einen Wärmetauscher 4 übertragen, welcher die thermische Leistung wenigstens teilweise an ein durch die Einleitung 17 zugeführtes Fluid übertragen kann. Nach Wärmeübertrag wird das relativ wärmere Fluid durch die Ausleitung 18 abgeführt. Die Zuführung des Fluids über die Einleitung 17 kann mittels eines Strömungsgenerators 7 unterstützt sein.

Gemäß der in Fig. 1 dargestellten Ausführungsform ist es jedoch lediglich möglich, die thermische Energie, die bei Betrieb der Hochtemperatur-Batterie 2 entsteht, abzuleiten. Die Schaltanordnung vermag jedoch nicht die Versorgung der Hochtemperatur-Batterie 2 mit thermischer Leistung zur Erreichung einer geeigneten Betriebstemperatur zu ermöglichen. Jedoch nur bei Erreichen einer thermischen Mindesttemperatur kann die Hochtemperatur-Batterie 2 wirtschaftlich betrieben werden und vermag über die elektrische Ableitung 20 elektrische Energie zur Verfügung zu stellen.

Um die Betriebstemperatur der Hochtemperatur-Batterie 2 zu erreichen, werden deshalb typischerweise geeignete Wärmevorrichtungen vorgesehen, mittels derer die Hochtemperatur-Batterie 2 auf die Betriebstemperatur gebracht werden kann. Die in Fig. 1 nicht weiter gezeigten Wärmevorrichtungen werden mit elektrischer Energie versorgt, und erfordern folglich einen zusätzlichen Versorgungs- und Kostenaufwand.

Um nicht nur die bei Betrieb einer Hochtemperatur-Batterie 2 möglicherweise entstehende thermische Energie abzuführen, sondern auch die Hochtemperatur-Batterie 2 überhaupt erst auf eine Betriebstemperatur zu erwärmen, eignet sich die in Fig. 2 dargestellte nicht erfindungsgemäße Ausführungsform. Demgemäß umfasst das ausführungsgemäße Kraftwerksystem 1 eine Gasturbine 3, die einen gasförmigen Brennstoff aus der Brennstoffzuleitung 35 zum Betrieb in der Brennkammer 30 verfeuert. Der Betrieb der Gasturbine 3 führt zu einer Kompression von Luft in der Kompressionsstufe 31 sowie einer Dekompression unter mechanischem Antrieb, der mit der Achse 33 verbundenen Turbinenschaufeln der Turbinenstufe 32. An dieser Stelle sei auch angemerkt, dass die Kompressionsstufe 31 eine Mehrzahl an einzelnen Kompressionsstufen bzw. die Turbinenstufe 32 eine Mehrzahl an einzelnen Kompressionsstufen aufweisen kann. Der durch den Verbrennungsprozess entstehende Abgasstrom 34 wird geeignet geführt, wobei wenigstens ein Teil der in dem Abgasstrom 34 enthaltenen Wärme durch einen Wärmetauscher 4 wenigstens zum Teil abgeführt werden kann.

Der Wärmeübertrag aus dem Abgasstrom 34 erfolgt auf ein nicht weiter gezeigtes Fluid, welches zur weiteren thermischen Konditionierung in einer Zuleitung 10 einem Heizelement 6 zugeführt wird. Nach der möglichen Konditionierung in dem Heizelement 6 wird das Fluid über die Zuleitung 10 der Hochtemperatur-Batterie 2 zugeführt. Aufgrund des erhöhten Temperaturniveaus bzw. aufgrund der in dem Fluid enthaltenen thermischen Energie wird durch thermische Wechselwirkung in der Hochtemperatur-Batterie 2 thermische Energie auf die Hochtemperatur-Batterie 2, die sich auf einem niedrigeren Temperaturniveau befindet, übertragen. Dieser Wärmeübertag gewährleistet das Erreichen einer Betriebstemperatur der Hochtemperatur-Batterie 2, so dass diese in wirtschaftlichem Maße elektrische Energie über die elektrische Ableitung 20 zur Verfügung stellen kann bzw. zur Speicherung aufnehmen kann. Um einen ausreichend großen Fluidfluss aus der Zuleitung 10 in die Hochtemperatur-Batterie 2 bereitstellen zu können, ist ein Strömungsgenerator 7 vorgesehen, der das Fluid mit einer Strömung beaufschlagt. Zur Abführung der restlichen thermischen Energie aus der Hochtemperatur-Batterie 2 bzw. zur Abführung des Fluids weist die Hochtemperatur-Batterie 2 eine Ableitung 11 auf, die in die Umgebung mündet. Demgemäß wird das Fluid bzw. die darin enthaltene thermische Energie ohne weitere Nutzung der Umgebung zugeführt.

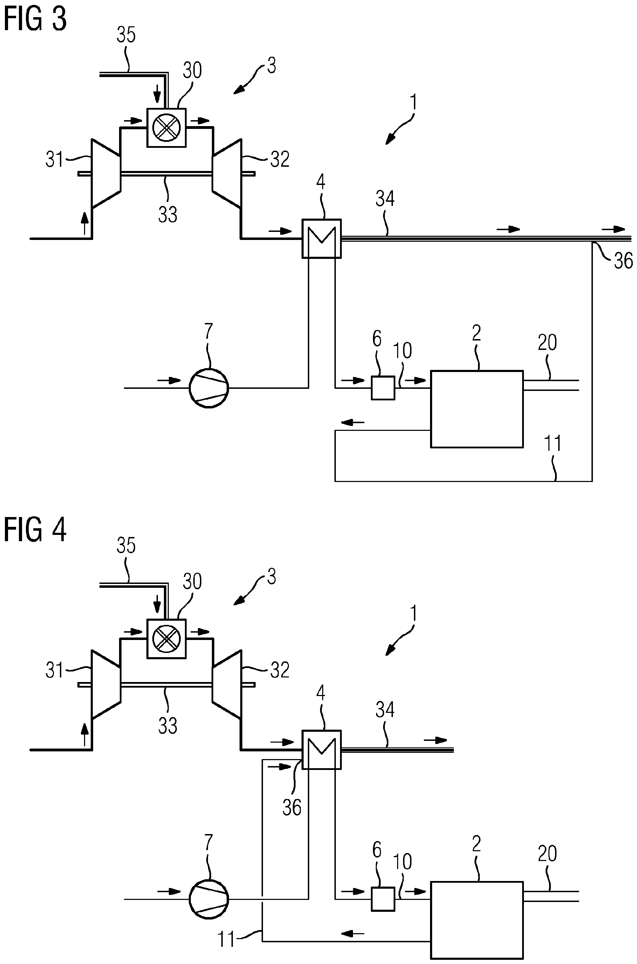

Gemäß der in Fig. 3 gezeigten Ausführungsform der vorliegenden Erfindung wird die aus der Hochtemperatur-Batterie 2 abgeführte Wärme erneut nutzbar gemacht. Hierbei unterscheidet sich die in Fig. 3 dargestellte Ausführungsform von der in Fig. 2 dargestellten Ausführungsform lediglich dahingehend, dass die Ableitung 11 nicht in die Umgebung mündet, sondern wiederum dem Abgasstrom 34 zugeführt wird. Dies erfolgt ausführungsgemäß an einem Zuleitpunkt 36, welche in Bezug auf den Wärmetauscher 4 abstromseitig im Abgasstrom angeordnet ist. Demgemäß kann die durch die Hochtemperatur-Batterie 2 nicht weiter benötigte thermische Energie dem Abgasstrom erneut zur Verfügung gestellt werden, um damit bspw. weitere Vorrichtungen zu betreiben. Besonders bevorzugt kann damit eine Dampferzeugungseinheit betrieben werden, die zur Bereitstellung von Dampf für den Betrieb einer Dampfturbine vorgesehen ist.

Eine solche Zuleitung des Fluids in den Abgasstrom, welches aus der Hochtemperatur-Batterie 2 abgeleitet wird, ist insbesondere dann geeignet, den Gesamtwirkungsgrad des Kraftwerksystems 1 zu steigern, wenn die Hochtemperatur-Batterie 2 bei Betrieb selbst thermische Energie erzeugt. Dies ist insbesondere der Fall, falls die Hochtemperatur-Batterie 2 eine wie oben beschriebene Metall-Luft-Batterie ist. In einem solchen Fall kann die aus der Hochtemperatur-Batterie 2 entnommene zusätzliche thermische Energie dem Abgasstrom 34 zugeführt werden, und erhöht damit dessen Temperaturniveau. Dies wiederum erlaubt eine verbesserte Erzeugung von Dampf in einer möglicherweise nachgeschalteten Dampferzeugereinheit. Ebenso ist es denkbar, dass die Zuleitung in den Abgasstrom 34 lediglich dann erfolgt, wenn die Hochtemperatur-Batterie 2 selbst thermische Energie erzeugt. Sollte die Hochtemperatur-Batterie 2 jedoch in einem anderen Betriebszustand, bspw. einem Ladezustand lediglich thermische Energie verbrauchen und keine zusätzlich zur Verfügung stellen, kann die Ableitung 11 auch unterbrochen sein. In einem solchen anderen Betriebszustand könnte bspw. das aus der Hochtemperatur-Batterie 2 austretende Fluid einer anderen Vorrichtung zugeleitet werden. Auch eine Ableitung in die Umgebung ist technisch möglich.

Gemäß einer nicht erfindungsgemäßen Ausführungsform kann, wie in Fig. 4 dargestellt, das aus der Hochtemperatur-Batterie 2 abgeleitete Fluid dem Wärmetauscher 4 zur Verfügung gestellt werden. Hierzu wird das Fluid mittels der Ableitung 11 an einen geeigneten Zuleitpunkt 36 des Wärmetauschers 4 geführt. Vor allem dann, wenn bei Betrieb der Hochtemperatur-Batterie 2 zusätzliche thermische Energie entsteht, und das Fluid ein höheres Temperaturniveau als bei Zuleitung in die Hochtemperatur-Batterie 2 aufweist, stellt dies eine vorteilhafte Fluidführung und -nutzung dar. Folglich wird die während des Betriebs der Hochtemperatur-Batterie 2 freiwerdende thermische Energie erneut auf das Fluid in dem Wärmetauscher 4 übertragen, welches zum Betrieb der Hochtemperatur-Batterie 2 als Prozessgas über die Zuleitung 10 zugeführt wird. Die Zuleitung zu dem Wärmetauscher 4 kann so ausgeführt sein, dass eine Mischung mit dem Abgasstrom 34 vor Wärmeübertragung im Wärmetauscher 4 erfolgt oder aber auch erst während oder nach dem Wärmeübertrag. In jedem Fall ist jedoch zu gewährleisten, dass ein thermischer Wärmeübertrag auf im Vergleich zum reinen Abgasstrom 34 anderem, bevorzugt auf erhöhtem Temperaturniveau erfolgen kann. Insbesondere bei Betrieb einer oben beschriebenen Metall-Luft-Batterie ist das Fluid Luft, und kann dem Abgasstrom 34 auch bei erhöhtem Temperaturniveau zugeführt werden.

## Patentansprüche

1. Kraftwerksystem (1) umfassend eine über wenigstens eine Zuleitung (10) mit einem Fluid versorgte Hochtemperatur-Batterie (2) zur Speicherung wie auch zur Abgabe von elektrischer Energie, eine Gasturbine (3) mit mindestens einer Kompressionsstufe (31) zur Kompression von Luft, einer Brennkammer (30) und mindestens einer Turbinenstufe (32) zur Erzeugung von elektrischer Energie, sowie einen Wärmetauscher (4), welcher dazu ausgebildet ist, thermische Energie aus dem Abgasstrom der Gasturbine (3) zu entnehmen und auf das Fluid zu übertragen, welches Fluid nach erfolgter Wärmeübertragung der Hochtemperatur-Batterie (2) über die wenigstens eine Zuleitung (10) zugeführt werden kann,
**dadurch gekennzeichnet, dass** die Hochtemperatur-Batterie (2) eine Ableitung (11) aufweist, welche dazu ausgebildet ist, das Fluid aus der Hochtemperatur-Batterie (2) abzuführen und dem Abgasstrom der Gasturbine (3) an einem in Bezug auf den Wärmetauscher (4) abstromseitigen Ort des Abgasstroms zuzuleiten, und das Kraftwerksystem (1) weiterhin eine weitere Vorrichtung aufweist, welche mit thermischer Energie des vereinigten Abgasstroms betreibbar ist.

2. Kraftwerksystem gemäß Anspruch 1,
**dadurch gekennzeichnet, dass** die Temperatur des Abgasstromes der Gasturbine (3) wenigstens eine Temperatur von 600°C aufweist.

3. Kraftwerksystem gemäß einem der vorhergehenden Ansprüche,
**dadurch gekennzeichnet, dass** die weitere Vorrichtung als Dampferzeugungseinheit ausgebildet ist, die zur Bereitstellung von Dampf für den Betrieb einer Dampfturbine vorgesehen ist..

4. Kraftwerksystem gemäß einem der vorhergehenden Ansprüche,
**dadurch gekennzeichnet, dass** das Kraftwerksystem (1) ein elektrisches Heizelement (6) aufweist, das dazu ausgebildet ist, den Energiegehalt des Fluids vor Zuführung in die Hochtemperatur-Batterie (2) über die Zuleitung (10) zu erhöhen, insbesondere in Bezug auf die Zuleitung (10) so angeordnet ist, dass beide miteinander in thermischer Wechselwirkung sind.

5. Kraftwerksystem gemäß einem der vorhergehenden Ansprüche,
**dadurch gekennzeichnet, dass** das Fluid mit einer Strömung beaufschlagt werden kann, welche durch einen Strömungsgenerator (7) erzeugt wird, der mit der Zuleitung (10) in fluidtechnischer Wirkverbindung steht.

6. Kraftwerksystem gemäß Anspruch 5,
**dadurch gekennzeichnet, dass** das Fluid ein Gas, insbesondere Luft ist, wobei bevorzugt der Strömungsgenerator (7) als Gebläse ausgebildet ist.

7. Kraftwerksystem gemäß einem der vorhergehenden Ansprüche,
**dadurch gekennzeichnet, dass** das Fluid ein Gas, insbesondere Luft ist, und die Hochtemperatur-Batterie (2) eine Metall-Luft-Batterie ist, die als Prozessgas thermisch konditioniertes Gas, insbesondere Luft erfordert.

8. Verfahren zum Betrieb eines Kraftwerksystem gemäß einem der vorhergehenden Ansprüche,
**dadurch gekennzeichnet, dass** insbesondere die Zufuhr von thermisch in dem Wärmetauscher (4) konditioniertem Fluid über die Zuleitung (10) an die Hochtemperatur-Batterie (2) temperaturgesteuert und/oder flussgesteuert erfolgt.

## Claims

1. Power plant system (1) comprising a high-temperature battery (2), supplied with a fluid via at least one feed line (10), for storing and also for delivering electric energy, a gas turbine (3), with at least one compression stage (31) for compressing air, a combustion chamber (30) and at least one turbine stage (32), for generating electric energy, and a heat exchanger (4) which is designed for extracting thermal energy from the exhaust gas flow of the gas turbine (3) and transferring said thermal energy to the fluid, which fluid can be fed to the high-temperature battery (2) via the at least one feed line (10) after heat transfer has been carried out, **characterized in that**
the high-temperature battery (2) has a discharge line (11) which is designed for discharging the fluid from the high-temperature battery (2) and for feeding said fluid to the exhaust gas flow of the gas turbine (3) at a downstream point of the exhaust gas flow with regard to the heat exchanger (4), and the power plant system (1) also features a further device which can be operated with thermal energy of the combined exhaust gas flow.

2. Power plant system according to Claim 1,
**characterized in that**
the temperature of the exhaust gas flow of the gas turbine (3) has at least a temperature of 600°C.

3. Power plant system according to one of the preceding claims,
**characterized in that**
the further device is configured as a steam generation unit which is provided for providing steam for the operation of a steam turbine.

4. Power plant system according to one of the preceding claims,
**characterized in that**
the power plant system (1) has an electric heating element (6) which is designed for increasing the energy content of the fluid before it is fed to the high-temperature battery (2) via the feed line (10), the electric heating element especially being arranged with the regard to the feed line (10) so that both thermally interact with each other.

5. Power plant system according to one of the preceding claims,
**characterized in that**
the fluid can be subjected to a flow which is generated by a flow generator (7) which is in fluidic functional communication with the feed line (10).

6. Power plant system according to Claim 5,
**characterized in that**
the fluid is a gas, especially air, wherein the flow generator (7) is preferably designed as a fan.

7. Power plant system according to one of the preceding claims,
**characterized in that**
the fluid is a gas, especially air, and the high-temperature battery (2) is a metal-air battery which requires thermally conditioned gas, especially air, as process gas.

8. Method for operating a power plant system according to one of the preceding claims,
**characterized in that**
the feed of fluid, which is thermally conditioned in the heat exchanger (4), via the feed line (10) to the high-temperature battery (2) is especially carried out in a temperature-controlled and/or flow-controlled manner.

## Revendications

1. Système ( 1 ) de centrale électrique comprenant une batterie ( 2 ) à haute température, alimentée en un fluide par au moins un conduit ( 10 ) d'apport, pour accumuler ainsi que pour céder de l'énergie électrique, une turbine ( 3 ) à gaz ayant au moins un étage ( 31 ) de compression pour de comprimer de l'air, une chambre de combustion ( 30 ) et au moins un étage ( 32 ) de turbine pour produire de l'énergie électrique ainsi qu'un échangeur de chaleur ( 4 ) constitué pour prélever de l'énergie thermique du courant de gaz d'échappement de la turbine ( 3 ) à gaz et la transmettre au fluide, lequel fluide, après que le transfert de chaleur a été effectué, peut être envoyé à la batterie ( 2 ) à haute température par le au moins un conduit ( 10 ) d'apport, **caractérisé en ce que**
la batterie ( 2 ) à haute température a un conduit ( 11 ) d'évacuation constitué pour évacuer le fluide de la batterie ( 2 ) à haute température et l'envoyer au courant de gaz d'échappement de la turbine ( 3 ) à gaz, en un emplacement, du côté du courant d'échappement par rapport à l'échangeur de chaleur ( 4 ), du courant de gaz d'échappement et le système ( 1 ) de centrale électrique a en outre un autre dispositif, qui peut fonctionner par l'énergie thermique du courant de gaz d'échappement réuni.

2. Système de centrale électrique suivant la revendication 1, **caractérisé en ce que**
la température du courant du gaz d'échappement de la turbine ( 3 ) à gaz est au moins une température de 600°C.

3. Système de centrale électrique suivant l'une des revendications précédentes,
**caractérisé en ce que**
l'autre dispositif est constitué sous la forme d'un groupe de production de vapeur prévu pour disposer de vapeur pour le fonctionnement d'une turbine à vapeur.

4. Système de centrale électrique suivant l'une des revendications précédentes,
**caractérisé en ce que**
le système ( 1 ) de centrale électrique a un élément ( 6 ) électrique chauffant, constitué pour augmenter la teneur en énergie du fluide avant l'apport à la batterie ( 2 ) à haute température par le conduit ( 10 ) d'apport, monté notamment par rapport au conduit ( 10 ) d'apport, de manière à ce que les deux soient en interaction thermique l'un avec l'autre.

5. Système de centrale électrique suivant l'une des revendications précédentes,
**caractérisé en ce que**
le fluide peut être alimenté en un courant produit par un générateur ( 7 ) de courant, qui est en liaison, en technique fluidique, avec le conduit ( 10 ) d'apport.

6. Système de centrale électrique suivant la revendication 5, **caractérisé en ce que**
le fluide est un gaz, notamment de l'air, le générateur ( 7 ) de courant étant constitué de préférence sous la forme d'une soufflante.

7. Système de centrale électrique suivant l'une des revendications précédentes,
**caractérisé en ce que**
le fluide est un gaz, notamment de l'air, et la batterie ( 2 ) à haute température est une batterie métal-air, qui exige, comme gaz de processus, du gaz conditionné thermiquement, notamment de l'air.

8. Procédé pour faire fonctionner un système de centrale électrique suivant l'une des revendications précédentes, **caractérisé en ce que**
notamment l'apport de fluide, conditionné thermiquement à l'échangeur de chaleur ( 4 ), s'effectue, de manière commandée en température et/ou commandée en flux, à la batterie ( 2 ) à haute température, par l'intermédiaire du conduit ( 10 ) d'apport.
